# EUROPEAN PATENT SPECIFICATION

(11) **EP 3 071 870 B1**
(45) Date of publication and mention of the grant of the patent: **01.04.2020**
(21) Application number: 14799832.2
(22) Date of filing: 20.11.2014
(51) Int. Cl.: F16L 41/08, F16L 41/00

(54) **TUBE FASTENER ASSEMBLY AND METHOD FOR FASTENING A TUBE TO TUBE FASTENER ASSEMBLY**
ROHRBEFESTIGUNGSANORDNUNG UND VERFAHREN ZUR BEFESTIGUNG EINES ROHRES AN DER ROHRBEFESTIGUNGSANORDNUNG
ENSEMBLE DE FIXATION DE TUBE ET PROCÉDÉ DE FIXATION D'UN TUBE À UN ENSEMBLE DE FIXATION DE TUBE

(30) Priority: 20.11.2013 GB 201320526
(43) Date of publication of application: 28.09.2016
(73) Proprietor: Eaton Intelligent Power Limited, Dublin 4 (IE)
(72) Inventor: HUCK, Christian, F-67480 Roeschwoog (FR); BERTRAND, Andre, 67410 Drusenheim (DE)
(74) Representative: Eaton IP Group EMEA
(86) International application number: PCT/EP2014/075196
(87) International publication number: WO 2015/075144

(56) References cited:
- EP-A1- 1 912 012
- FR-A1- 2 924 193
- US-A1- 2004 207 200
- US-A1- 2010 237 615

## Description

The present invention relates to a tube fastener assembly and a method for fastening a tube to a tube fastener assembly in particular for a coolant passage in a refrigerating cycle for vehicles.

In refrigeration cycles the different components such as a compressor, a condenser, an expansion valve and an evaporator, have to be connected through refrigerant pipes and tubes in order to form a refrigerant circuit. In particular, in the use of such a refrigerant cycle in a vehicle the refrigerant cycle is exposed to vibrations so that the joints between the components and the pipes and tubes need to have a sufficient strength.

However, the implementation of tube fastener assemblies according to the invention is not limited to refrigeration cycles but can also be used in other joining pipes and tubes.

US 8 141 911 B2 discloses several embodiments of tube fastener assemblies according to the prior art. In one embodiment a pipe connection joint includes a flange and a pipe connection portion. A pipe is welded on a side of the flange in such a way as to communicate with the pipe connection portion. When the flange is joint to a connection object through a bolt, the pipe connection portion of the flange is connected to a passage of the connection object. The pipe extends from the flange in a direction transverse to the direction of the pipe connection portion. According to the required angle at which the pipe extends from the flange different pipes or flanges have to be provided. Hence, the mounting direction of the pipe on the flange cannot be changed so that various kinds of flanges must be manufactured in correspondence with various mounting directions of the pipe.

US 8 141 911 B2 describes further embodiment according to which the flange includes a pipe joining hole penetratingly formed therein in correspondence with a passage of the connection object. A pipe is formed in an L-shape and is provided with an extended portion at a connection portion of the pipe. The pipe is inserted into the pipe joining hole of the flange wherein the extended portion of the pipe is held in a widened portion of the pipe joining hole so that the pipe is supported within the pipe joining hole. In this mounted state the connection portion of the pipe projects over a lower face of the flange. When mounting the flange to a connection object the connection portion of the pipe is inserted into a passage of the connection object. Before fastening the flange to the connection object the L-shaped pipe can be rotated within the pipe joining hole in order to adjust the mounting direction of the pipe. When fixing the flange to the connection object the pipe is pressed into stepped portions of the widened portion of the pipe connection hole, preventing a rotation of the pipe after fixation. The connection between the pipe and the flange is made during the connection of the flange to the connection object. It is not possible to pre-assemble the pipe and the flange prior mounting the flange to the connection object. Further, a bending process of the pipe is necessary because the pipe itself is fluidly connected to the passage of the connection object.

WO 01/63168 A1 discloses another embodiment of a tube fastener assembly having a flange which can be fixed to a connection object. The flange is provided with a pipe joining hole. A pipe being inserted into the pipe joining hole and being inserted into a passage of the connection object. The pipe is L-shaped and is guided through an aperture of a bracket. The bracket is fixed to the flange and can be orientated in a number of discrete angles mounting positions in order to vary the mounting direction of the pipe. For connecting the bracket to the flange both elements are provided with a toothing.

US 2004/0207200 A1 discloses a rotatable tube fastener assembly.

It is an object of the invention to provide a tube fastening assembly which enables an easy assembly of the tube fastening assembly with the possibility to adjust a mounting direction of a pipe as required.

The object is solved by a combination of a tube and a tube fastener assembly according to claim 1. The corresponding tube fastener assembly comprises a retention element having a fastener portion and a holding portion, a connection element having a fluid channel for a flow of fluid between a connection end of the fluid channel and a tube end of the fluid channel for mounting a tube, said connection element is adapted for being fixed to the holding portion of said retention element,
wherein the connection element is rotatable about an axis of rotation relative to said retention element before being fixed to the holding portion of said retention element and wherein in a mounted position the tube (2) is arranged in a radial direction to the retention element (9).

The advantage is that the tube fastener assembly can be pre-assembled in any desired mounting direction of the tube. In addition, the connection element is fluidly connected to a passage of a connecting object providing a high connection strength between the connection element and the connection object to which the tube fastening assembly is mounted.

Preferably, the connection element is adapted for being bonded, in particular brazed, soldered, welded or glued, to the holding portion of the retention element.

The fastener portion of the retention element is positioned off-set to the axis of rotation so that the tube fastener assembly is secured against rotation when being mounted to a connection object.

A tube is mounted to the tube end of the fluid channel, wherein the tube can be bonded, in particular brazed, soldered, welded or glued. The bonding of the tube can be made within one process of bonding the bonding of the connection element to the retention element.

The tube end is positioned off-set to the axis of rotation. Further, the fastener portion of the retention element is provided with a bore for retaining a screw to mount the tube fastener assembly to the connection element, such as a component of a refrigerant circuit.

The bore is typically orientated parallel to the axis of rotation.

The retention element preferably has a contact surface for mounting the retention element to a mounting surface of a connection object such as an aggregate or component of a refrigerant circuit.

The holding portion of the retention element is adapted to hold the connection element between the holding portion and the mounting surface of the connection object. Thereby, the joining strength between the connection element and the connection object is enhanced.

The holding portion of the retention element may have a collar being in contact to a collar of the connection element wherein the collar of the connection element is bonded to the collar of the retention element.

This can be accomplished by a collar of the connection element which is adapted for being held between a collar of the retention element and the mounting surface of the connection object.

Preferably, the connection element is continuously rotatable relative to the retention element before being fixed.

The object of the present invention is further solved by a method according to claim 11 for fastening a tube to a tube fastener assembly comprising the steps of providing a tube fastener assembly having a retention element with a holding portion, mounting a connection element to said retention element (9) rotatably about an axis of rotation (L) relative to said retention element (9), said connection element having a tube end for mounting a tube (2) in a radial direction to the retention element (9),
rotating said connection element relative to the retention element to a desired position, fixing said connection element to said holding portion of said retention element.

Preferably, the method further comprises the step of fixing the connection element to said holding portion of the retention element by the bonding process such like brazing, soldering, welding or gluing.

The above and other objects, features and advantages of the present invention will be apparent from the following detailed description of a preferred embodiment of the invention in conjunction with the accompanying drawings, in which:
- Figure 1: is a perspective view of an embodiment of a tube fastener assembly according to the present invention;
- Figure 2: is a longitudinal sectional view of the tube fastener assembly according to Figure 1;
- Figure 3: is a sectional view of an exemplary connection object and
- Figure 4: is another sectional view of the tube fastener assembly according to Figure 1.

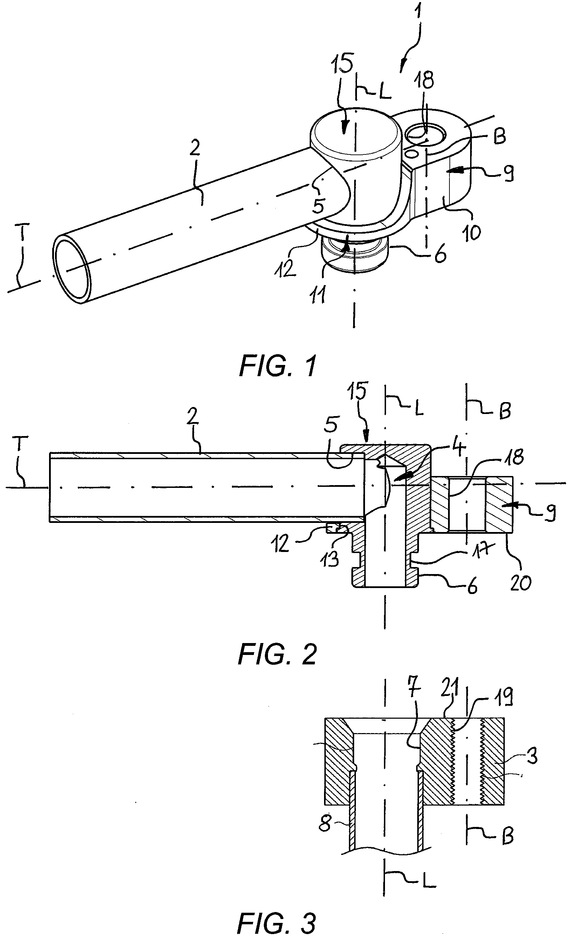

Figure 1 is a perspective view of a tube fastener assembly 1 connected to a tube 2 and Figure 2 is a longitudinal sectional view of the tube fastener assembly 1 with tube 2 according to Figure 1. The tube fastener assembly 1 can be mounted and connected to a connection object 3 which is depicted in Figure 3. Figures 1 to 3 are described together.

The tube fastener assembly 1 has a fluid channel 4 for a flow of fluid. The fluid channel 4 has a tube end in the form of the fixation bore 5. The tube 2 is inserted into the fixation bore 5 and sealingly connected to the tube fastener assembly 1 for example by a bonding process such as brazing, soldering, welding or gluing. At the other end the fluid channel 4 has a connection end provided in the form of a projection 6. The projection 6 can be inserted into a passage 7 of the connection object 3 in a sealingly manner. For this reason the projection 6 is provided with a circumferential groove 17 for holding a sealing ring (not shown) which is in sealing contact with the projection 6 and the passage 7.

Thus, the tube fastener assembly 1 provides a flow passage from the tube 2, which is connected to the tube fastener assembly 1, and a tube 8 which is fixed to the connection object 3. The projection 6 as well as the whole tube fastener assembly 1 is produced by a cutting process and has a high stability providing for an enhanced joining strength between the tube fastener assembly 1, particularly the projection 6, and the connection object 3.

For fixing the tube fastener assembly 1 the tube fastener assembly 1 is provided with a bore 18 which is aligned with a threaded bore 19 in the connection object 3. A screw (not shown) can be inserted through the bore 18 and can be screwed into the threaded bore 19 in order to fix the tube fastener assembly 1 to the connection object 3. The bore 18 and the threaded bore 19 are positioned off-set and parallel to the projection 6 of the tube fastener assembly 1 and the passage 7 of the connection object 3. Thus, when the projection 6 is inserted into the passage 7 the screw (not shown) inserted through the bore 18 and screwed into the threaded bore 19 secures the tube fastener assembly 1 from being rotated about the longitudinal axis L of the projection 6.

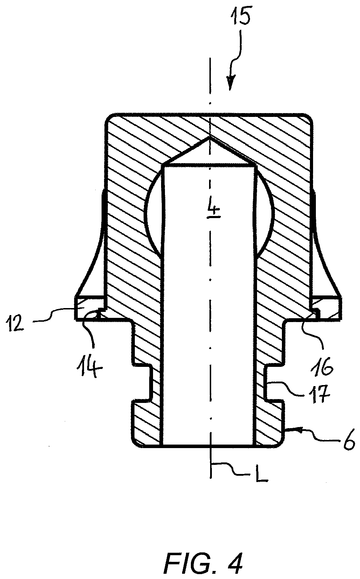

The tube fastener assembly 1 comprises a retention element 9 and a connection element 15 which are fixed to each other and which can be rotated about the longitudinal axis L (axis of rotation) before being fixed. The retention element 9 has a fastener portion 10 and a holding portion 11. The fastener portion 10 is provided with a bore 18 for retaining the above-mentioned screw. The holding portion 11 has a ring-shaped collar 12 forming a holding bore 13. The connection element 15 is inserted into the holding bore 13 of the holding portion 11. As can be best seen in Figure 4 the connection element 15 is provided with a circumferential outer collar 14 which is in contact with the collar 12 of the holding portion 11. The collar 14 of the connection element 15 is supported against a step 16 within the ring-shaped collar 12 of the holding portion 11. The collars 12, 14 are formed such that they establish a common contact surface 20 which is in contact with a mounting surface 21 of the connection object 3 in an assembled condition.

In the disclosed embodiment a tube axis T of the tube 2 being connected to the connection element 15 intersects the longitudinal axis L of the connection element 15 at a right angle. However, this angle can deviate from a right angle. Further, the connection element 15 is fixed to the retention element 9 such that the mounting direction of tube 2 is straight in regard to the bore 18 of the holding portion 11. In other words, a first plain containing the tube axis T and the longitudinal axis L is identical to a second plain containing the longitudinal axis L and a bore axis B of bore 18. However, before fixing the connection element 15 to the retention element 9 the connection element 15 can be freely rotated. In the disclosed embodiment as shown in Figure 1 the connection element 15 can be rotated by approximately 90 degrees clockwise and 90 degrees counter clockwise. After the required mounting direction has been reached the connection element 15 can be fixed by a bonding process to the retention element 9.

### Reference numerals list

- 1: tube fastener assembly
- 2: tube
- 3: connection object
- 4: fluid channel
- 5: tube end/fixation bore
- 6: connection end/projection
- 7: passage
- 8: tube
- 9: retention element
- 10: fastener portion
- 11: holding portion
- 12: collar of the holding portion
- 13: holding bore
- 14: collar of the connection element
- 15: connection element
- 16: step
- 17: groove
- 18: bore
- 19: threaded bore
- 20: contact surface
- 21: mounting surface
- L: longitudinal axis
- T: tube axis
- B: bore axis

## Claims

1. Combination of a tube (2) and a tube fastener assembly (1) comprising:
- a retention element (9) having a fastener portion (10) and a holding portion (11),
- a connection element (15) having a fluid channel (4) for a flow of fluid between a connection end (6) of the fluid channel (4) and a tube end (5) of the fluid channel (4),
said connection element (15) is adapted for being fixed to the holding portion (11) of said retention element (9), wherein the connection element (15) is rotatable about an axis of rotation (L) relative to said retention element (9) before being fixed to the holding portion (11) of said retention element (9), and wherein the holding portion (11) has a ring-shaped collar (12) forming a holding bore (13) into which the connection element (15) is inserted,
wherein the tube end (5) is provided in form of a fixation bore for mounting the tube (2), wherein the tube (2) is mounted to the tube end (5), wherein the tube end (5) is positioned off-set to the axis of rotation (L) and wherein the axis (T) of the tube (2) intersects the axis of rotation (L).

2. Combination according to claim 1 wherein the connection element (15) is adapted for being brazed, soldered, welded or glued to the retention element (9).

3. Combination according to any one of the preceding claims wherein the fastener portion (10) of the retention element (9) is positioned off-set to the axis of rotation (L).

4. Combination according to any one of the preceding claims wherein the fastener portion (10) of the retention element (9) is provided with a bore (18) for retaining a screw.

5. Combination according to claim 4 wherein the bore (18) is orientated parallel to the axis of rotation (L).

6. Combination according to any one of the preceding claims wherein the retention element (9) has a contact surface (20) for mounting the retention element (9) to a mounting surface (21) of a connection object (3).

7. Combination according to claim 6 wherein the holding portion (11) of the retention element (9) is adapted to hold the connection element (15) between the holding portion (11) and the mounting surface (21) of the connection object (3).

8. Combination according to claim 7 wherein the holding portion (11) of the retention element (9) has the collar (12) being in contact to a collar (14) of the connection element (15) and wherein the collar (12) of the connection element (15) is bonded to the collar (12) of the retention element (9).

9. Combination according to claim 8 wherein the collar of the connection element is adapted for being held between the collar (12) of the retention element (15) and the mounting surface (21) of the connection object (3).

10. Combination according to any one of the preceding claims wherein the connection element (15) is continuously rotatable relative to the retention element (9).

11. A method for fastening a tube (2) to a tube fastener assembly (1) to build a combination according to any one of claims 1 to 10, the method comprising the steps of:
- providing a tube fastener assembly (1) having a retention element (9) with a holding portion (11), wherein the provided tube fastener assembly is a tube fastener assembly (1) of a combination according to any one of claims 1 to 10,
- mounting a connection element (15) to said retention element (9) rotatably about an axis of rotation (L) relative to said retention element (9), said connection element having a tube end for mounting the tube (2) in a radial direction to the retention element (9),
- rotating said connection element (15) relative to the retention element (9) to a desired position,
- fixing said connection element (15) to said holding portion (11) of said retention element (9).

12. The method according to claim 11, further comprising fixing the connection element (15) to said holding portion (11) of the retention element (9) by a bonding process such like brazing, soldering, welding or gluing.

## Patentansprüche

1. Kombination aus einem Rohr (2) und einer Rohrbefestigungsanordnung (1), umfassend:
- ein Rückhalteelement (9), das einen Befestigungsabschnitt (10) und einen Halteabschnitt (11) aufweist,
- ein Verbindungselement (15), das einen Fluidkanal (4) aufweist für einen Fluss von Fluid zwischen einem Verbindungsende (6) des Fluidkanals (4) und einem Rohrende (5) des Fluidkanals (4), wobei das Verbindungselement (15) angepasst ist, um am Halteabschnitt (11) des Rückhalteelement (9) befestigt zu werden, wobei das Verbindungselement (15) um eine Drehachse (L) im Verhältnis zu dem Rückhalteelement (9) drehbar ist, bevor es am Halteabschnitt (11) des Rückhalteelement (9) befestigt wird, und wobei der Halteabschnitt (11) einen ringförmigen Kragen (12) aufweist, der eine Haltebohrung (13) bildet, in die das Verbindungselement (15) eingesetzt wird,
wobei das Rohrende (5) in Form einer Fixierungsbohrung zum Montieren des Rohrs (2) bereitgestellt ist, wobei das Rohr (2) am Rohrende (5) montiert wird, wobei das Rohrende (5) außerhalb der Drehachse (L) positioniert ist, und wobei die Achse (T) des Rohrs (2) die Drehachse (L) kreuzt.

2. Kombination nach Anspruch 1, wobei das Verbindungselement (15) angepasst ist, um am Rückhalteelement (9) hartverlötet, verlötet, verschweißt oder verklebt zu werden.

3. Kombination nach einem der vorstehenden Ansprüche, wobei der Befestigungsabschnitt (10) des Rückhalteelements (9) außerhalb der Drehachse (L) positioniert ist.

4. Kombination nach einem der vorstehenden Ansprüche, wobei der Befestigungsabschnitt (10) des Rückhalteelements (9) mit einer Bohrung (18) zum Zurückhalten einer Schraube bereitgestellt ist.

5. Kombination nach Anspruch 4, wobei die Bohrung (18) parallel zu der Drehachse (L) ausgerichtet ist.

6. Kombination nach einem der vorstehenden Ansprüche, wobei das Rückhalteelement (9) eine Kontaktoberfläche (20) zum Montieren des Rückhalteelements (9) an einer Montageoberfläche (21) eines Verbindungsgegenstands (3) aufweist.

7. Kombination nach Anspruch 6, wobei der Halteabschnitt (11) des Rückhalteelements (9) angepasst ist, um das Verbindungselement (15) zwischen dem Halteabschnitt (11) und der Montageoberfläche (21) des Verbindungsobjekts (3) zu halten.

8. Kombination nach Anspruch 7, wobei der Halteabschnitt (11) des Rückhalteelements (9) einen Kragen (12) aufweist, der mit einem Kragen (14) des Verbindungselements (15) in Berührung ist, und wobei der Kragen (12) des Verbindungselements (15) an den Kragen (12) des Rückhalteelements (9) gebunden ist.

9. Kombination nach Anspruch 8, wobei der Kragen des Verbindungselements angepasst ist, um zwischen dem Kragen (12) des Rückhalteelements (15) und der Montageoberfläche (21) des Verbindungsobjekts (3) gehalten zu werden.

10. Kombination nach einem der vorstehenden Ansprüche, wobei das Verbindungselement (15) im Verhältnis zu dem Rückhalteelement (9) kontinuierlich drehbar ist.

11. Verfahren zum Befestigen eines Rohrs (2) an einer Rohrbefestigungsanordnung (1), um eine Kombination nach einem der Ansprüche 1 bis 10 zu errichten, wobei das Verfahren die Schritte umfasst:
- Bereitstellen einer Rohrbefestigungsanordnung (1), die ein Rückhalteelement (9) mit einem Halteabschnitt (11) aufweist, wobei die bereitgestellte Rohrbefestigungsanordnung eine Rohrbefestigungsanordnung (1) einer Kombination nach einem der Ansprüche 1 bis 10 ist,
- Montieren eines Verbindungselements (15) an dem Rückhalteelement (9) drehbar um eine Drehachse (L) im Verhältnis zu dem Rückhalteelement (9), wobei das Verbindungselement ein Rohrende aufweist zum Montieren des Rohrs (2) in einer radialen Richtung zu dem Rückhalteelement (9),
- Drehen des Verbindungselements (15) im Verhältnis zu dem Rückhalteelement (9) in eine gewünschte Position,
- Fixieren des Verbindungselements (15) an dem Halteabschnitt (11) des Rückhalteelements (9).

12. Verfahren nach Anspruch 11, weiter umfassend Fixieren des Verbindungselements (15) an dem Halteabschnitt (11) des Rückhalteelements (9) durch einen Bindungsprozess, wie Hartlöten, Löten, Schweißen oder Verkleben.

## Revendications

1. Combinaison d'un tube (2) et d'un ensemble de fixation de tube (1) comprenant :
- un élément de retenue (9) comportant une partie de fixation (10) et une partie de maintien (11),
- un élément de raccordement (15) comportant un canal de fluide (4) pour un écoulement de fluide entre une extrémité de raccordement (6) du canal de fluide (4) et une extrémité de tube (5) du canal de fluide (4),
ledit élément de raccordement (15) est conçu pour être fixé à la partie de maintien (11) dudit élément de retenue (9), dans laquelle l'élément de raccordement (15) peut tourner autour d'un axe de rotation (L) par rapport audit élément de retenue (9) avant d'être fixé à la partie de maintien (11) dudit élément de retenue (9), et dans laquelle la partie de maintien (11) comporte un collier de forme annulaire (12) formant un alésage de maintien (13) dans lequel l'élément de raccordement (15) est inséré,
dans laquelle
l'extrémité de tube (5) est prévue sous la forme d'un alésage de fixation pour monter le tube (2), dans laquelle le tube (2) est monté sur l'extrémité de tube (5), dans laquelle l'extrémité de tube (5) est positionnée décalée par rapport à l'axe de rotation (L) et dans laquelle l'axe (T) du tube (2) coupe l'axe de rotation (L).

2. Combinaison selon la revendication 1 dans laquelle l'élément de raccordement (15) est conçu pour être brasé, brasé avec une brasure tendre, soudé ou collé à l'élément de retenue (9).

3. Combinaison selon l'une quelconque des revendications précédentes dans laquelle la partie de fixation (10) de l'élément de retenue (9) est positionnée décalée par rapport à l'axe de rotation (L).

4. Combinaison selon l'une quelconque des revendications précédentes dans laquelle la partie de fixation (10) de l'élément de retenue (9) est dotée d'un alésage (18) pour retenir une vis.

5. Combinaison selon la revendication 4 dans laquelle l'alésage (18) est orienté parallèle à l'axe de rotation (L).

6. Combinaison selon l'une quelconque des revendications précédentes dans laquelle l'élément de retenue (9) comporte une surface de contact (20) pour monter l'élément de retenue (9) sur une surface de montage (21) d'un objet de raccordement (3).

7. Combinaison selon la revendication 6 dans laquelle la partie de maintien (11) de l'élément de retenue (9) est conçue pour maintenir l'élément de raccordement (15) entre la partie de maintien (11) et la surface de montage (21) de l'objet de raccordement (3).

8. Combinaison selon la revendication 7 dans laquelle la partie de maintien (11) de l'élément de retenue (9) a le collier (12) étant en contact avec un collier (14) de l'élément de raccordement (15) et dans laquelle le collier (12) de l'élément de raccordement (15) est lié au collier (12) de l'élément de retenue (9).

9. Combinaison selon la revendication 8 dans laquelle le collier de l'élément de raccordement est conçu pour être maintenu entre le collier (12) de l'élément de retenue (15) et la surface de montage (21) de l'objet de raccordement (3).

10. Combinaison selon l'une quelconque des revendications précédentes dans laquelle l'élément de raccordement (15) peut tourner de manière continue par rapport à l'élément de retenue (9).

11. Procédé de fixation d'un tube (2) à un ensemble de fixation de tube (1) pour construire une combinaison selon l'une quelconque des revendications 1 à 10, le procédé comprenant les étapes de :
- prévision d'un ensemble de fixation de tube (1) comportant un élément de retenue (9) avec une partie de maintien (11), dans lequel l'ensemble de fixation de tube prévu est un ensemble de fixation de tube (1) d'une combinaison selon l'une quelconque des revendications 1 à 10,
- montage d'un élément de raccordement (15) sur ledit élément de retenue (9) pouvant tourner autour d'un axe de rotation (L) par rapport audit élément de retenue (9), ledit élément de raccordement comportant une extrémité de tube pour monter le tube (2) dans une direction radiale par rapport à l'élément de retenue (9),
- rotation dudit élément de raccordement (15) par rapport à l'élément de retenue (9) jusqu'à une position souhaitée,
- fixation dudit élément de raccordement {15) à ladite partie de maintien (11) dudit élément de retenue (9).

12. Procédé selon la revendication 11, comprenant en outre la fixation de l'élément de raccordement (15) à ladite partie de maintien (11) de l'élément de retenue (9) par un procédé de liaison tel qu'un brasage, un brasage avec une brasure tendre, un soudage ou un collage.
